(19) 

Europäisches
Patentamt

European
Patent Office

Office européen
des brevets

(11) **EP 4 741 895 A1**

(12) **EUROPEAN PATENT APPLICATION**
published in accordance with Art. 153(4) EPC

(43) Date of publication:
**13.05.2026 Bulletin 2026/20**

(21) Application number: **24857613.4**

(22) Date of filing: **30.01.2024**

(51) International Patent Classification (IPC):
*G02B 6/293* (2006.01)  *H04J 14/02* (2006.01)
*H10F 30/227* (2025.01)

(52) Cooperative Patent Classification (CPC):
**G02B 6/293; G02B 6/42; H04J 14/02**

(86) International application number:
**PCT/CN2024/074759**

(87) International publication number:
**WO 2025/044056 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 CN 202311107881**

(71) Applicant: **Huawei Technologies Co., Ltd.
Shenzhen, Guangdong 518129 (CN)**

(72) Inventor: **REN, Yang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **OPTICAL DETECTOR, OPTICAL RECEIVING SYSTEM, OPTICAL DETECTION METHOD AND CHIP**

(57)    A photodetector, an optical receiving system, an optical detection method, and a chip are provided. The photodetector includes a microring detector (33) and N microring resonant cavities (32) that are successively arranged and coupled. A 1st microring resonant cavity (32) is coupled to a waveguide (31), the microring detector (33) is coupled to an Nth microring resonant cavity (32). A first coupling coefficient between the waveguide (31) and the 1st microring resonant cavity (32) is not less than a second coupling coefficient between the microring detector (33) and the Nth microring resonant cavity (32). The microring detector (33) is configured to generate a first photocurrent based on a target optical signal. The first photocurrent is used for detecting strength of the target optical signal. The target optical signal is obtained by the microring detector (33) and the N microring resonant cavities (32) by filtering initial optical signals transmitted in the waveguide (31). Extinction ratio of the photodetector is higher.

FIG. 3

## Description

This application claims priority to Chinese Patent Application No. 202311107881.2, filed on August 29, 2023 and entitled "PHOTODETECTOR, OPTICAL RECEIVING SYSTEM, OPTICAL DETECTION METHOD, AND CHIP", which is incorporated herein by reference in its entirety.

## TECHNICAL FIELD

This application relates to the field of optical communication, and in particular, to a photodetector, an optical receiving system, an optical detection method, and a chip.

## BACKGROUND

In an optical/electrical communication process, a transmit end sends optical signals of a plurality of different wavelengths to a receive end. The optical signals are transmitted via a transmission medium and reach the receive end. An optical receiving system is deployed on a chip of the receive end, and the optical receiving system detects the optical signals via a photodetector, to receive the optical signals.

## SUMMARY

This application provides a photodetector, an optical receiving system, an optical detection method, and a chip, to improve extinction ratio of optical detection. Technical solutions are as follows.
According to a first aspect, a photodetector is provided. The photodetector is coupled to a waveguide. The photodetector includes a microring detector and N microring resonant cavities that are successively arranged. N is an integer greater than or equal to 1. A $1^{st}$ microring resonant cavity in the N microring resonant cavities is coupled to the waveguide and a coupling coefficient is a first coupling coefficient. The microring detector is coupled to an $N^{th}$ microring resonant cavity in the N microring resonant cavities and a coupling coefficient is a second coupling coefficient, and the first coupling coefficient is greater than or equal to the second coupling coefficient;
The microring detector is configured to generate a first photocurrent based on a target optical signal. The first photocurrent is used for detecting strength of the target optical signal. The target optical signal is obtained by the microring detector and the N microring resonant cavities by filtering initial optical signals transmitted in the waveguide.
The N microring resonant cavities and the microring detector jointly filter the initial optical signals to obtain the target optical signal, and generate the first photocurrent based on the target optical signal, so that the strength of the target optical signal can be detected. Filtering the initial optical signals can ensure that a wavelength range of the target optical signal obtained through filtering is smaller, to improve extinction ratio. In addition, the microring detector is directly coupled to the $N^{th}$ microring resonant cavity, so that an insertion loss in a process in which an optical signal is transmitted from the $N^{th}$ microring resonant cavity to the microring detector can be reduced.
The first coupling coefficient between the waveguide and the $1^{st}$ microring resonant cavity is made to be greater than the second coupling coefficient between the microring detector and the $N^{th}$ microring resonant cavity, so that it can be ensured that the photodetector exhibits an expected bandwidth, and a characteristic of a flat-top photocurrent response of optical detection is implemented, to detect a more stable optical signal and reduce detection difficulty.
In a possible implementation, N is an integer greater than or equal to 2. Two adjacent microring resonant cavities in the N microring resonant cavities are coupled. A coupling coefficient between every two adjacent microring resonant cavities in the N microring resonant cavities is a third coupling coefficient. The first coupling coefficient is greater than or equal to the third coupling coefficient. The second coupling coefficient is less than or equal to the third coupling coefficient. A value relationship between the first coupling coefficient, the second coupling coefficient, and the third coupling coefficient is ensured, so that it can be further ensured that the photodetector exhibits an expected bandwidth, and a characteristic of a flat-top photocurrent response of optical detection is implemented.
In a possible implementation, N is an integer greater than 2, a third coupling coefficient between an intermediate resonant cavity and a previous microring resonant cavity is greater than or equal to a third coupling coefficient between the intermediate resonant cavity and a next microring resonant cavity, and the intermediate resonant cavity is a microring resonant cavity other than the $1^{st}$ microring resonant cavity and the $N^{th}$ microring resonant cavity in the N microring resonant cavities. A value relationship between the third coupling coefficient between the intermediate resonant cavity and the previous microring resonant cavity and the third coupling coefficient between the intermediate resonant cavity and the next microring resonant cavity is defined, so that it is further ensured that the photodetector can exhibit an expected bandwidth, and a characteristic of a flat-top photocurrent response of optical detection is implemented.
In a possible implementation, the microring detector and the N microring resonant cavities have different radiuses. The radiuses of the microring detector and the N microring resonant cavities are different, so that free spectral ranges of the microring detector and the N microring resonant cavities are different, to increase wavelength spacing of an effective free spectral range between the microring detector and the N microring resonant cavities, and further improve extinction ratio of optical detection.

In a possible implementation, a loss coefficient of the microring detector is greater than a loss coefficient of each of the N microring resonant cavities. A value relationship between the loss coefficient and the loss coefficient is defined, so that it can be ensured that the photodetector exhibits an expected bandwidth, and a characteristic of a flat-top photocurrent response of optical detection is implemented.

In a possible implementation, a first optical-to-electrical conversion structure is disposed on the microring detector. The first optical-to-electrical conversion structure is configured to generate the first photocurrent based on the target optical signal. The first optical-to-electrical conversion structure is disposed on the microring detector, so that conversion from an optical signal to a photocurrent can be successfully implemented, and the strength of the optical signal is detected based on the photocurrent.

In a possible implementation, a first tuner is disposed on the microring detector. The first tuner is configured to adjust a first resonant wavelength of the microring detector to a wavelength of the target optical signal. The first resonant wavelength is a center wavelength in a wavelength range of the target optical signal. The first resonant wavelength is adjusted via the first tuner, so that the target optical signal can be obtained through filtering based on the first resonant wavelength.

In a possible implementation, a second optical-to-electrical conversion structure is disposed on each of the N microring resonant cavities. The second optical-to-electrical conversion structure is configured to generate a second photocurrent. The second photocurrent is used for detecting the strength of the target optical signal. The second optical-to-electrical conversion structures are disposed on the N microring resonant cavities, so that conversion from an optical signal to a photocurrent can be successfully implemented, and strength of the optical signal is detected based on the photocurrent.

In a possible implementation, a second tuner is disposed on each of the N microring resonant cavities. The second tuner is configured to adjust a second resonant wavelength of each microring resonant cavity to the wavelength of the target optical signal. The second resonant wavelength is a center wavelength in a wavelength range of an optical signal transmitted in each microring resonant cavity. The second resonant wavelength is adjusted via the second tuner, so that the target optical signal can be obtained through filtering based on the second resonant wavelength.

According to a second aspect, an optical receiving system is provided. The optical receiving system includes an optical detection array. The optical detection array includes a waveguide and at least one photodetector. The at least one photodetector is separately coupled to the waveguide. Each of the at least one photodetector is the photodetector in any one of the first aspect or the possible implementations of the first aspect.

The waveguide is configured to receive initial optical signals transmitted by an optical transmitter. Each of the at least one photodetector is configured to generate a first photocurrent. The first photocurrent is used for detecting strength of an optical signal of a corresponding wavelength in the initial optical signals. A wavelength of an optical signal detected by each photodetector is different. The optical receiving system is integrated with at least one photodetector, so that different optical signals transmitted in the waveguide can be filtered and detected in parallel, to improve optical detection efficiency.

In a possible implementation, the optical receiving system further includes a receiver array and a receiver circuit. The receiver array includes at least one transimpedance amplifier and at least one operational amplifier. A quantity of the at least one transimpedance amplifier, a quantity of the at least one operational amplifier, and a quantity of the at least one photodetector are the same. One transimpedance amplifier is connected to one operational amplifier, one transimpedance amplifier is connected to one photodetector, and the at least one operational amplifier is connected to the receiver circuit. The transimpedance amplifier is configured to convert the first photocurrent into a first photovoltage. The operational amplifier is configured to amplify the first photovoltage to obtain an amplified photovoltage, and send the amplified photovoltage to the receiver circuit. The receiver circuit is configured to receive the amplified photovoltage. The transimpedance amplifier and the operational amplifier convert a photocurrent into a voltage and then amplify the voltage, and send the photovoltage to the receiver circuit, to detect the optical signal.

According to a third aspect, an optical detection method is provided. The method is applied to a photodetector. The photodetector is coupled to a waveguide. The photodetector includes a microring detector and N microring resonant cavities that are successively arranged. N is an integer greater than or equal to 1. A 1st microring resonant cavity in the N microring resonant cavities is coupled to the waveguide and a coupling coefficient is a first coupling coefficient. The microring detector is coupled to an $N^{th}$ microring resonant cavity in the N microring resonant cavities and a coupling coefficient is a second coupling coefficient. The first coupling coefficient is greater than or equal to the second coupling coefficient. The microring detector generates a first photocurrent based on a target optical signal. The first photocurrent is used for detecting strength of the target optical signal. The target optical signal is obtained by the microring detector and the N microring resonant cavities by filtering initial optical signals transmitted in the waveguide.

In a possible implementation, N is an integer greater than or equal to 2. Two adjacent microring resonant cavities in the N microring resonant cavities are coupled. A coupling coefficient between every two adjacent microring resonant cavities in the N microring resonant cavities is a third coupling coefficient. The first coupling coefficient is greater than or equal to the third coupling coefficient. The second coupling coefficient is less than or equal to the third coupling coefficient.

In a possible implementation, N is an integer greater than 2, a third coupling coefficient between an intermediate resonant cavity and a previous microring resonant cavity is greater than or equal to a third coupling coefficient between the intermediate resonant cavity and a next microring resonant cavity, and the intermediate resonant cavity is a microring resonant cavity other than the 1st microring resonant cavity and the $N^{th}$ microring resonant cavity in the N microring resonant cavities.

In a possible implementation, the microring detector and the N microring resonant cavities have different radiuses.

In a possible implementation, a loss coefficient of the microring detector is greater than a loss coefficient of each of the N microring resonant cavities.

In a possible implementation, a first optical-to-electrical conversion structure is disposed on the microring detector. That the microring detector generates the first photocurrent based on the target optical signal includes: The first optical-to-electrical conversion structure generates the first photocurrent based on the target optical signal.

In a possible implementation, a first tuner is disposed on the microring detector. Before that the microring detector generates the first photocurrent based on the target optical signal, the method further includes: The first tuner adjusts a first resonant wavelength of the microring detector to a wavelength of the target optical signal; and the microring detector filters the initial optical signals based on the first resonant wavelength to obtain the target optical signal. The first resonant wavelength is a center wavelength in a wavelength range of the target optical signal.

In a possible implementation, a second optical-to-electrical conversion structure is disposed on each of the N microring resonant cavities. The method further includes: The second optical-to-electrical conversion structure generates at least one second photocurrent. The second photocurrent is used for detecting the strength of the target optical signal.

In a possible implementation, a second tuner is disposed on each of the N microring resonant cavities. Before that the microring detector generates the first photocurrent based on the target optical signal, the method further includes: The second tuner adjusts a second resonant wavelength of the microring resonant cavity to the wavelength of the target optical signal; and the microring resonant cavity filters the initial optical signals based on the second resonant wavelength to obtain the target optical signal. The second resonant wavelength is the center wavelength in the wavelength range of the target optical signal.

According to a fourth aspect, a chip is provided. The photodetector according to any one of the first aspect or the possible implementations of the first aspect is deployed on the chip.

It should be understood that, for beneficial effects achieved by the technical solutions of the third aspect and the fourth aspect of this application and the corresponding possible implementations, refer to the technical effects of the first aspect and the corresponding possible implementations of the first aspect. Details are not described herein again.

## BRIEF DESCRIPTION OF DRAWINGS

FIG. 1 is a diagram of a usage scenario of a microring filtering modulator according to an embodiment of this application;

FIG. 2 is a diagram of a structure of an integrated optical receiver based on a microring filter according to an embodiment of this application;

FIG. 3 is a diagram of a structure of a photodetector according to an embodiment of this application;

FIG. 4 is a diagram of a structure of another photodetector according to an embodiment of this application;

FIG. 5 is a diagram of a structure of still another photodetector according to an embodiment of this application;

FIG. 6 is a diagram of a structure of yet another photodetector according to an embodiment of this application;

FIG. 7 is a diagram of a structure of yet another photodetector according to an embodiment of this application;

FIG. 8 is a diagram of a structure of yet another photodetector according to an embodiment of this application;

FIG. 9 is a diagram of relative optical power according to an embodiment of this application;

FIG. 10 is another diagram of relative optical power according to an embodiment of this application;

FIG. 11 is a diagram of a structure of a single microring detector according to an embodiment of this application;

FIG. 12 is a diagram of a photocurrent response comparison result according to an embodiment of this application;

FIG. 13 is a schematic flowchart of an optical detection method according to an embodiment of this application;

FIG. 14 is a diagram of a structure of an optical detection array according to an embodiment of this application; and

FIG. 15 is a diagram of a structure of an optical receiving system according to an embodiment of this application.

## DESCRIPTION OF EMBODIMENTS

Terms used in embodiments of this application are only used to explain specific embodiments of this application, but are not intended to limit this application.

With generation of large-scale artificial intelligence (artificial intelligence, AI) models based on a large data amount, such as chat generative pre-trained transformer (chat generative pre-trained transformer, ChatGPT), AI technologies continue to develop and iterate. Specifically, for a larger data amount, the AI model needs to have a stronger data throughput capability, so that plenty of data can be transferred to the AI model within limited time, and the data can be transferred between submodules of the AI model. At a larger data scale, more complex AI models can be trained, but more layers are required in the AI models. Therefore, faster data throughput capability is required to enhance advantages of the large-scale AI models.

The AI model typically requires large-scale clusters including thousands of graphics processing units (graphics processing units, GPUs) or other dedicated parallel data processors. However, a high-bandwidth memory (high-bandwidth memory, HBM), a communication bandwidth, and power consumption between large-scale clusters are main bottlenecks that limit a cluster scale. In a high performance computing (high performance computing, HPC) or AI cluster scale, the communication bandwidth and the power consumption that can be implemented by using a high-speed interconnection technology through cables are limited. In this case, to implement high-speed interconnection between large-scale clusters, a trend of optical-in and copper-out is becoming increasingly significant. In other words, an optical input and output (optical input and output, OIO) technology develops rapidly and gradually replaces traditional electrical communication that is implemented based on copper and other cables.

A microring-based wavelength division multiplexing (wavelength division multiplexing, WDM) transceiver technology is one of implementation solutions of the OIO technology. A microring resonator (microring resonator, MRR) modulator is a modulator based on the WDM technology. Compared with a conventional Mach-Zehnder modulator (Mach-Zehnder modulator, MZM), the MRR modulator has a lower single-wavelength rate, but has a smaller size and lower power consumption. In addition, the MRR modulator has wavelength selectivity, and may perform multi-wavelength multiplexing in a WDM manner, so that a single-fiber rate of the MRR modulator is higher than a single-fiber rate of the MZM.

WDM in a WDM transmitter based on MRR integration is implemented through modulation of a plurality of microrings at a transmit end, and at a receive end, a signal of each wavelength needs to be filtered via a plurality of photodetectors, and then is separately detected and finally converted into an electrical signal. The microring is a microring resonant cavity, and may also be referred to as a microring filter. A single-fiber rate of a microring-based transceiver technology may be determined by a product of a single-wavelength rate and a quantity of wavelengths. Therefore, a larger quantity of pathways, that is, a larger quantity of wavelengths that can be received by the microring, and a larger quantity of microring-based channels indicate that a higher interconnection rate of bandwidth can be achieved.

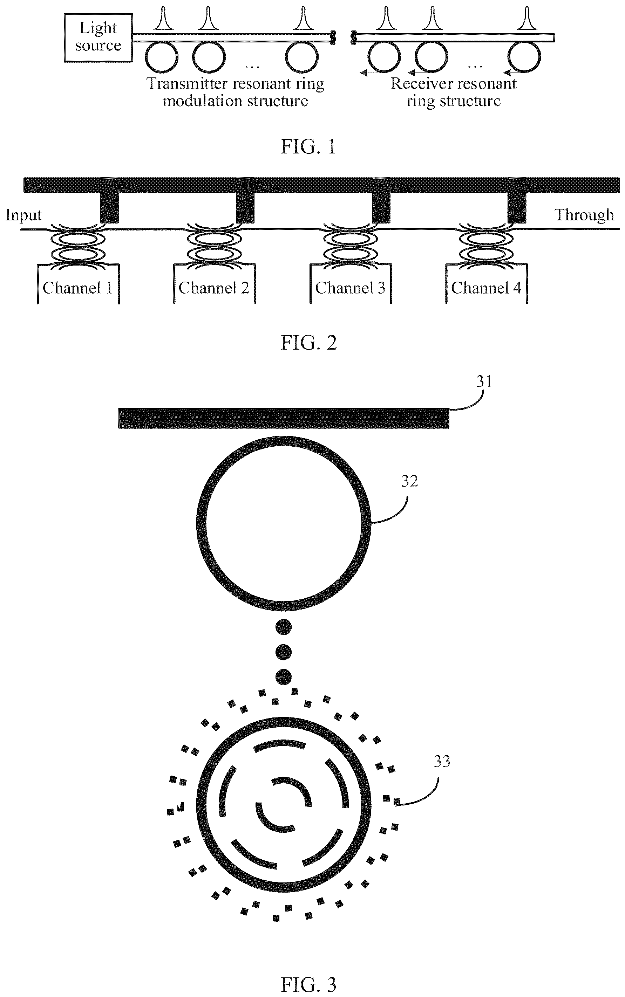

For example, FIG. 1 is a diagram of a usage scenario of an MRR modulator. A left side of FIG. 1 shows a transmitter resonant microring modulation structure (transmitter resonant microring modulation structure), including a light source. The light source may be, for example, a quantum dot multi-wavelength laser (quantum dot multi-wavelength laser, QD MWL). The QD MWL may emit optical signals of a plurality of wavelengths, and transmit, via a waveguide, the optical signals to a transmitter array connected to the waveguide. The transmitter array includes a plurality of microrings. The plurality of microrings are coupled to a same waveguide, and different microrings can filter and modulate optical signals of different wavelengths.

Each wavelength emitted by a laser in a WDM transmitter may be aligned with a central operating wavelength of each microring. Because the microring has wavelength selectivity, each microring modulates only an optical signal whose wavelength is the same as that the central operating wavelength of the microring, and then transmits modulated optical signals of different wavelengths to the waveguide, so that the waveguide transmits the modulated optical signals of a plurality of wavelengths at the same time.

A right side of the figure shows a receiver resonant microring structure (receiver resonant microring structure). A receive end filters signals of different wavelengths by using a microring structure that is the same as that of a transmit end. After filtering corresponding wavelength signals, each microring is connected to a photodetector (photodetector, PD) to perform optical detection and receive WDM optical signals.

Because extinction ratio of a single microring for wavelength selection is insufficient, that is, a ratio of an optical signal required in optical signals obtained through filtering to all optical signals obtained through filtering is small, and precision of filtering an optical signal is insufficient, a microring filter at the receive end may not completely block a signal of another wavelength from entering a PD connected to the filter, causing degradation of a signal detected by the PD, which finally reflects a bit error rate of the signal. Due to a characteristic of low extinction ratio of the single microring, a filtering spectrum response curve of the single microring is usually in a tip Lorentz line shape, so that detected optical power fluctuates greatly, and signal degradation is also caused. If a plurality of wavelength channels including a single microring are integrated into one waveguide, crosstalk occurs between different channels, causing degradation of the signal detected by the PD. Therefore, a plurality of wavelength channels cannot be integrated based on the single microring, and an optical receiver integrated with a single microring filter cannot meet a requirement for large-capacity transmission.

FIG. 2 is a diagram of a structure of an integrated optical receiver based on a microring filter. Optical signals of different wavelengths are input (input) from one end of the waveguide, and pass through (through) a plurality of channels, for example, a channel 1 to a channel 4, and a spacing between two adjacent channels may be 50 micrometers (micrometers, $\mu$m). Filtering is performed by two coupled microrings in one channel. The coupling of the two microrings can provide higher wavelength selectivity, so that intercepting power of another channel can be better avoided, and a bit error rate of a PD can be reduced. In addition, coupling of a plurality of microrings supports a flat filter line type, that is, a flat-top line type. The flat filter makes optical power fluctuation smaller. This helps reduce a bit error rate during detection of the PD.

However, there is a loss when an optical signal is transmitted between two coupled microrings, and an insertion loss still exists between the microring and a connected PD. Therefore, relying only on increasing a quantity of microrings to improve extinction ratio of optical detection leads to low power of an optical signal received by the PD after filtering by the microring. Even if extinction ratio of a plurality of microrings is higher, if a loss caused by coupling and filtering of the plurality of microrings is greater, an advantage of high extinction ratio may not exist. Therefore, a photodetector that can improve extinction ratio of optical detection is urgently needed.

For example, FIG. 3 is a diagram of a structure of a photodetector according to an embodiment of this application. The photodetector is coupled to a waveguide 31. The photodetector includes a microring detector (MRR PD) 33 and N microring resonant cavities 32, where N is an integer greater than or equal to 1. The N microring resonant cavities 32 are successively arranged between the waveguide 31 and the microring detector 33. The waveguide 31 is coupled to a 1st microring resonant cavity in the N microring resonant cavities 32, the microring detector 33 is coupled to an $N^{th}$ microring resonant cavity in the N microring resonant cavities 32, and the N microring resonant cavities 32 and the microring detector 33 are integrated into a same channel. If N is an integer greater than 1, two adjacent microring resonant cavities 32 in the N microring resonant cavities 32 are coupled. As shown in FIG. 3, the microring detector 33 has a form similar to that of the microring resonant cavity. The microring detector 33 not only includes a structure of the microring resonant cavity, but also integrates some functions of the PD, so that the PD is integrated inside a filter, and an insertion loss between the microring resonant cavity 32 and the microring detector 33 can be reduced. The microring detector 33 not only has wavelength selectivity, but also has a function of filtering an optical signal based on a wavelength, and can further improve channel extinction ratio by coupling to the N microring resonant cavities 32, that is, improve extinction ratio and precision of optical detection.

The following describes in detail composition and functions of each structure in the photodetector.

The N microring resonant cavities and the microring detector may jointly filter initial optical signals transmitted in the waveguide, to obtain a target optical signal. A wavelength range of the target optical signal is less than a wavelength range of the initial optical signals.

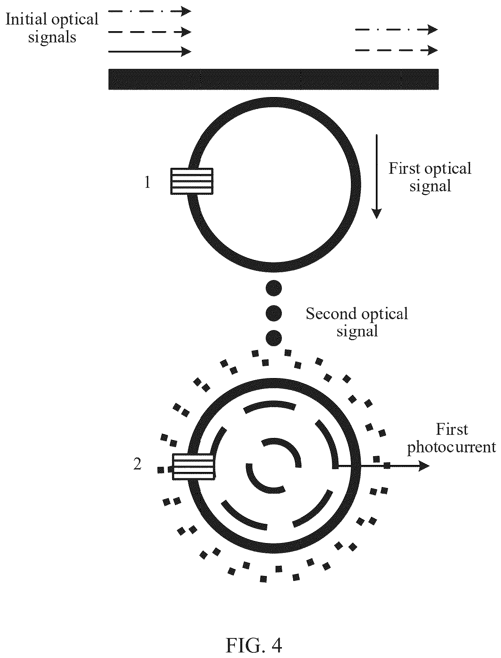

For example, refer to a diagram of a structure of a photodetector shown in FIG. 4. The initial optical signals may be transmitted in the waveguide. The initial optical signals include optical signals of different wavelengths, and the optical signals of different wavelengths are represented by different arrows in FIG. 4. The initial optical signals include an optical signal to be obtained by the N microring resonant cavities and the microring detector.

A first tuner (tuner) may be disposed on the microring detector. The first tuner may be configured to adjust a first resonant wavelength of the microring detector to a wavelength of the target optical signal, where the first resonant wavelength is a center wavelength in the wavelength range of the target optical signal. Second tuners are disposed on the N microring resonant cavities. The second tuner is configured to adjust a second resonant wavelength of each microring resonant cavity to the wavelength of the target optical signal. The second resonant wavelength is a center wavelength in a wavelength range of an optical signal transmitted in each microring resonant cavity. Because the second resonant wavelengths of the N microring resonant cavities are the wavelength of the target optical signal, the N microring resonant cavities can obtain, from a plurality of optical signals transmitted in the waveguide, an optical signal including the target optical signal.

For example, a rectangle 1 on the 1st microring resonant cavity in FIG. 4 is a second tuner on the 1st microring resonant cavity, and the second tuner adjusts a second resonant wavelength of the 1st microring resonant cavity to the wavelength $\lambda$ of the target optical signal. The 1st microring resonant cavity can obtain, based on the second resonant wavelength, the optical signal including the target optical signal from the initial optical signals transmitted in the waveguide, where a center wavelength of the optical signal is $\lambda$. A rectangle 2 on the microring detector in FIG. 4 is the first tuner on the microring detector, and the first tuner adjusts the first resonant wavelength of the microring detector to the wavelength $\lambda$ of the target optical signal.

When the photodetector works, because the photodetector is located in one channel, tuners of each microring resonant cavity and the microring detector are required to align the resonant wavelengths of the microring resonant cavity and the microring detector to the wavelength of the target optical signal, so that center wavelengths of wavelength ranges of optical signals transmitted in the channel are the same. Because the first resonant wavelength of the microring detector is the same as the second resonant wavelengths of the N microring resonant cavities, the microring detector and the N microring resonant cavities may jointly filter the initial optical signals based on the same resonant wavelength, to obtain the target optical signal, and most of the target optical signal is distributed in the microring detector, so that the microring detector generates a first photocurrent based on the target optical signal.

The following describes an example of a process in which the N microring resonant cavities and the microring detector jointly filter the initial optical signals and obtain the target optical signal. The filtering may be a process of changing distribution of optical signals of different wavelengths in each microring resonant cavity and the microring detector.

The 1st microring resonant cavity obtains, from the initial optical signals transmitted in the waveguide, an optical signal (for example, a first optical signal shown in FIG. 4) corresponding to the second resonant wavelength, filters out an optical signal that is in the optical signal and whose wavelength differs greatly from the wavelength of the target optical signal, and continues to transmit an optical signal obtained through filtering.

If N is 1, an optical signal obtained through filtering by the 1st microring resonant cavity is directly transmitted to the microring detector, and the microring detector filters the optical signal obtained through filtering by the 1st microring resonant cavity again, so that an optical signal distributed in the microring detector is equivalent to including only the target optical signal. An optical signal obtained through filtering by the microring detector again is the target optical signal, or an optical signal distributed in the microring detector and obtained through filtering is the target optical signal.

If N is a number greater than 1, the N microring resonant cavities may successively filter optical signals, and the microring detector filters an optical signal obtained through a plurality of times of filtering, to obtain the target optical signal. For example, N is 2. A 2nd microring resonant cavity obtains an optical signal obtained through filtering by the 1st microring resonant cavity. Because the second tuner may also be disposed on the 2nd microring resonant cavity, a second resonant wavelength of the 2nd microring resonant cavity may also be the wavelength of the target optical signal. After obtaining the optical signal obtained through filtering by the 1st microring resonant cavity, the 2nd microring resonant cavity filters, by using the wavelength of the target optical signal as the center wavelength, the optical signal (for example, a second optical signal shown in FIG. 4) obtained through filtering by the 1st microring resonant cavity again. The microring detector may filter an optical signal obtained through filtering by the 2nd microring resonant cavity again, so that an optical signal distributed in the microring detector is close to including only the target optical signal. An optical signal obtained through filtering by the microring detector again is the target optical signal, or an optical signal distributed in the microring detector and obtained through filtering is the target optical signal.

In a possible implementation, a first optical-to-electrical conversion structure is disposed on the microring detector. The first optical-to-electrical conversion structure is configured to generate the first photocurrent based on the target optical signal, so that the microring detector can generate the first photocurrent based on the target optical signal. The first photocurrent is used for detecting strength of the target optical signal.

Composition of the first optical-to-electrical conversion structure is not limited in this embodiment of this application. For example, the first optical-to-electrical conversion structure may be a diode or has a structure similar to that of a diode, for example, a PN junction or a PIN junction disposed on the microring detector, in other words, an N-type (electronic conductivity) doping (doping) region and a P-type (cavity conductivity) doping region are disposed on the microring detector. Refer to FIG. 4. Two different doping materials (represented by a dashed-line ring and a double-line ring) are respectively disposed on both sides of a ring waveguide (represented by a solid-line ring) of the microring detector. The two different doping materials respectively form the N-type doping region and the P-type doping region. A region near a boundary surface of the two doping regions is the PN junction. The ring waveguide may be a silicon (Si) waveguide. Alternatively, the first optical-to-electrical conversion structure may be a structure integrated by group III (III)-V (V) compound materials, and the group III-V compound materials include gallium arsenide (GaAs), indium phosphide (InP), and the like.

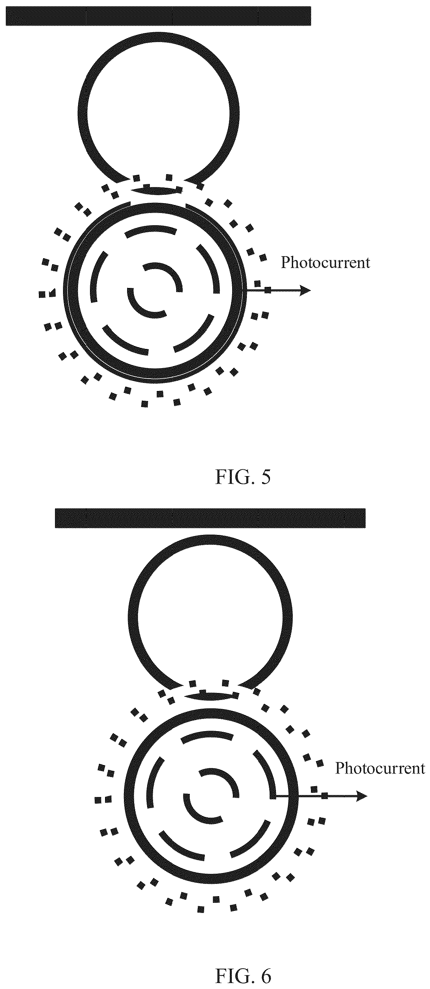

Alternatively, on the basis of disposing the PN junction or the PIN junction on the microring detector, germanium (Ge) may be epitaxially grown on the ring waveguide of the microring detector, and Ge is doped. For example, in a structure of the photodetector shown in FIG. 5, an incompletely enclosed ring on the microring detector is epitaxial Ge.

Regardless of the composition of the first optical-to-electrical conversion structure disposed on the microring detector, a voltage may be applied to two ends of the microring detector, so that the first optical-to-electrical conversion structure absorbs photons in the target optical signal and an electron-hole pair is generated, that is, a photo-generated carrier is generated, to generate a first photocurrent (which may also be referred to as photocurrent for short) shown in FIG. 4 to FIG. 6. Optionally, the first optical-to-electrical conversion structure has a plurality of photon absorption mechanisms, including a two-photon absorption (two-photon absorption, TPA) effect, a free carrier absorption (free carrier absorption, FCA) effect, a defect state absorption (defect state absorption, DSA) effect, a surface state absorption (surface state absorption, SSA) effect, and the like. This is not limited in this embodiment of this application.

In addition to the foregoing basic structure and functions corresponding to the basic structure, the photodetector provided in this embodiment of this application may further have different features, to implement different functions. The following uses a feature 1 to a feature 4 as examples to describe different features of the photodetector.

Feature 1: Coupling coefficients decrease progressively.

A coupling coefficient between the waveguide and the 1st microring resonant cavity is a first coupling coefficient. A coupling coefficient between the microring detector and the Nth microring resonant cavity is a second coupling coefficient. The first coupling coefficient is greater than the second coupling coefficient. A value relationship between the first coupling coefficient and the second coupling coefficient is defined, so that it can be ensured that the photodetector exhibits an expected bandwidth, and a characteristic of a flat-top photocurrent response of optical detection is implemented, to detect a more stable optical signal and reduce detection difficulty.

For example, the photodetector shown in FIG. 6 includes one microring resonant cavity, and the microring resonant cavity is coupled to both the waveguide and the microring detector. A first coupling coefficient between the microring resonant cavity and the waveguide is $\mu_1$, and a second coupling coefficient between the microring resonant cavity and the microring detector is $\mu_2$. A relationship that the first coupling coefficient $\mu_1$ and the second coupling coefficient $\mu_2$ need to comply with is $\mu_1 > \mu_2$ or $\mu_1 \geq \mu_2$.

In a possible implementation, N is an integer greater than or equal to 2. In other words, two or more microring resonant cavities exist between the waveguide and the microring detector, and a coupling coefficient between every two adjacent microring resonant cavities in the N microring resonant cavities is a third coupling coefficient. In this implementation, the first coupling coefficient is greater than or equal to the third coupling coefficient, and the second coupling coefficient is less than or equal to the third coupling coefficient.

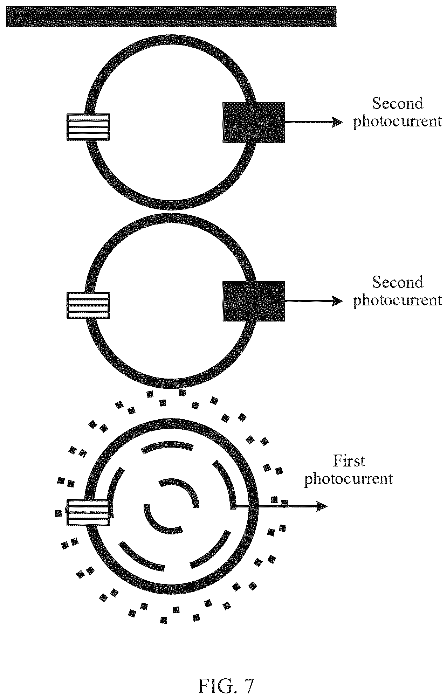

For example, the photodetector shown in FIG. 7 includes two microring resonant cavities. A first coupling coefficient between the 1st microring resonant cavity and the waveguide is $\mu_1$, a third coupling coefficient between a 2nd microring resonant cavity and the 1st microring resonant cavity is $\mu_2$, and a second coupling coefficient between the microring detector and the 2nd microring resonant cavity is $\mu_3$. A relationship that the first coupling coefficient $\mu_1$, the third coupling coefficient $\mu_2$, and the second coupling coefficient $\mu_3$ need to comply with is $\mu_1 > \mu_2 > \mu_3$ or $\mu_1 \geq \mu_2 \geq \mu_3$.

Optionally, if N is an integer greater than 2, a third coupling coefficient between an intermediate resonant cavity and a previous microring resonant cavity is greater than or equal to a third coupling coefficient between the intermediate resonant cavity and a next microring resonant cavity, and the intermediate resonant cavity is a microring resonant cavity other than the 1st microring resonant cavity and the Nth microring resonant cavity in the N microring resonant cavities.

For example, the photodetector shown in FIG. 3 includes a plurality of microring resonant cavities. A first coupling coefficient between the 1st microring resonant cavity and the waveguide is $\mu_1$, a third coupling coefficient between an ith microring resonant cavity and a previous microring resonant cavity is $\mu_i$, a third coupling coefficient between an ith microring resonant cavity and a next microring resonant cavity is $\mu_{i+1}$, and a second coupling coefficient between the Nth microring resonant cavity and the microring detector is $\mu_{N+1}$. A relationship that the coupling coefficients need to comply with is $\mu_1 > \mu_i > \mu_{i+1} > \mu_{N+1}$ or $\mu_1 \geq \mu_i \geq \mu_{i+1} \geq \mu_{N+1}$. i is an integer greater than 1 and less than or equal to N-1.

Regardless of a value of N, that is, a quantity of microring resonant cavities, coupling coefficients between every two microring resonant cavities are in descending order according to an arrangement sequence from the waveguide to the microring detector, so that it can be ensured that the photodetector exhibits an expected bandwidth, and a characteristic of a flat-top photocurrent response of optical detection is implemented.

Feature 2: Microrings radiuses are different.

A microring radius is a radius of the microring detector or a radius of the N microring resonant cavities. A free spectral range (free spectral range, FSR) of the microring resonant cavity or the microring detector may be defined according to the following formula (1). $\lambda$ is an operating wavelength, that is, a resonant wavelength of the microring resonant cavity or the microring detector, R is the radius of the microring resonant cavity or the microring detector, $n_g$ is a group refractive index of the microring waveguide, and pi is the ratio of the circumference of a circle to its diameter.

$$\text{FSR} = \lambda^2/(2 * \text{pi} * \text{R} * n_g) \qquad (1)$$

When microring resonant cavities of different radiuses are coupled to the microring detector, an effective (effective) FSR of an entire microring system (that is, one channel) is expanded. The FSR is a wavelength spacing between two adjacent resonant peaks of the microring resonant cavity or the microring detector. Changing the radius of the microring resonant cavity or the microring detector, that is, assigning different radiuses to different microring resonant cavities and the microring detector can increase an effective FSR wavelength spacing, so that an optical receiver can accommodate more channels of different wavelengths, to increase a communication capacity.

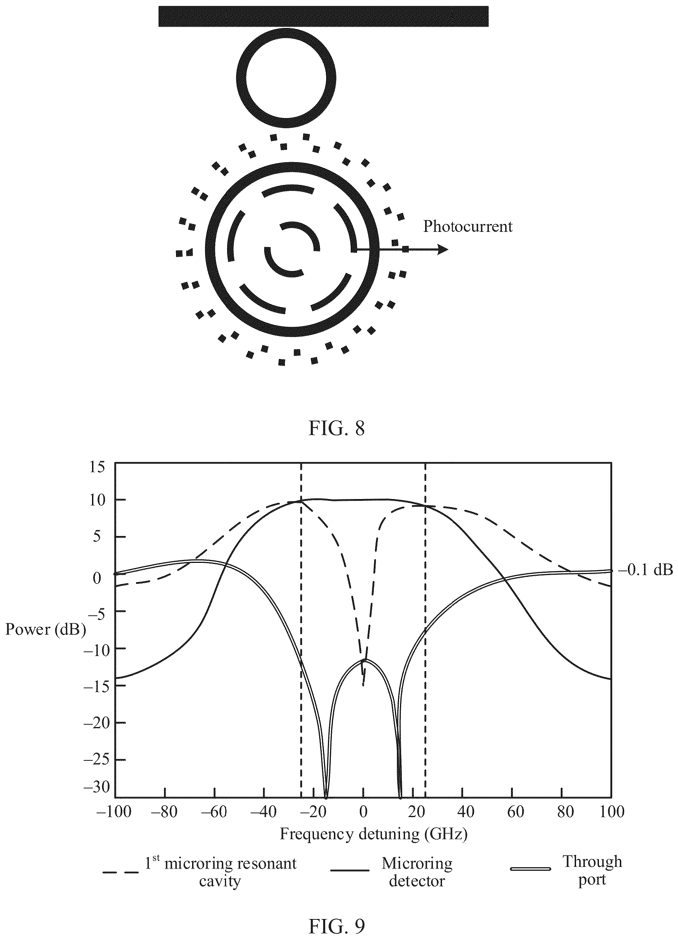

As shown in FIG. 8, an example in which two microring resonant cavities of different radiuses is coupled is used. The radius of the microring resonant cavity is R1, the radius of the microring detector is R2, and R1≠R2. An effective FSR of a microring system including the microring resonant cavity and the microring detector satisfies the following formula (2), that is, the effective FSR is expanded to a least common multiple (least common multiple, lcm) of FSRs corresponding to original radiuses. An FSR 1 is an FSR corresponding to R1, and an FSR 2 is an FSR corresponding to R2.

$$FSR_{effective}=lcm(FSR\ 1, FSR\ 2) \qquad (2)$$

For example, if the FSR 1=8 nanometers (nanometers, nm), and the FSR 2=10 nm, the effective FSR of the entire system is lcm(8,10)=40 nm.

In a possible implementation, radiuses of the microring detector and the N microring resonant cavities are different, so that an effective FSR of a channel can be increased to a maximum extent. Optionally, the radiuses of the microring detector and the N microring resonant cavities may be partially the same. For example, the microring detector and one or more of the N microring resonant cavities have a same radius, or the microring detector and the N microring resonant cavities have different radiuses, but there are two or more microring resonant cavities of a same radius in the N microring resonant cavities.

Feature 3: The microring detector has a maximum loss coefficient.

Because an optical signal needs to be continuously refracted and reflected when being transmitted in the N microring resonant cavities and the microring detector, a specific loss is generated in a process of transmitting the optical signal in the microring detector and the N microring resonant cavities, so that strength of the optical signal is reduced. The microring detector and the N microring resonant cavities may have different loss coefficients.

In a possible implementation, the loss coefficient of the microring detector is greater than the loss coefficient of each of the N microring resonant cavities.

For example, in the structure of the photodetector shown in FIG. 5, the loss coefficient of the microring resonant cavity is $\alpha_1$, the loss coefficient of the microring detector is $\alpha_2$, and a relationship that the loss coefficient $\alpha_1$ and the loss coefficient $\alpha_2$ need to satisfy is $\alpha_1 < \alpha_2$.

If N is an integer greater than 1, a loss coefficient of the $i^{th}$ microring resonant cavity is $\alpha_i$, where i is an integer greater than or equal to 1 and less than or equal to N. The loss coefficient of the detector is $\alpha_{N+1}$. Therefore, a relationship that the loss coefficients need to satisfy is $\alpha_i < \alpha_{N+1}$. Optionally, in this embodiment of this application, it only needs to be ensured that the loss coefficient of the microring detector is greater than the loss coefficients of the N microring resonant cavities, and a value relationship between the loss coefficients of the N microring resonant cavities is not limited.

Optionally, the loss coefficient of the microring detector may also be the same as the loss coefficients of the N microring resonant cavities. Specifically, the loss coefficient of the microring detector may be the same as all the loss coefficients of the N microring resonant cavities, or the loss coefficient of the microring detector may be the same as loss coefficients of some of the N microring resonant cavities, or the loss coefficient of the microring detector is different from the loss coefficients of the N microring resonant cavities, but loss coefficients of some of the N microring resonant cavities are the same. Regardless of whether the loss coefficient of the microring detector is the same as loss coefficients of all or some of the N microring resonant cavities, it needs to be ensured that the loss coefficient of the microring detector is the maximum loss coefficient.

Feature 4: Multi-microring optical-to-electrical conversion is performed.

A second optical-to-electrical conversion structure is disposed on each of the N microring resonant cavities. The second optical-to-electrical conversion structure is configured to generate a second photocurrent. The second photocurrent is used for detecting the strength of the target optical signal. Because a plurality of coupled microring resonant cavity structures make wavelength alignment more difficult, the second optical-to-electrical conversion structure that absorbs optical power and generates a photocurrent may be disposed in the microring resonant cavity, so that an optical power value of the target optical signal in each microring resonant cavity, that is, the strength of the target optical signal in each microring resonant cavity, can be detected, to check whether a resonant wavelength of each microring resonant cavity is aligned with the wavelength of the target optical signal, detection resources can be enriched, and detection accuracy can be improved.

For example, refer to FIG. 7. The first optical-to-electrical conversion structure that can generate the first photocurrent is disposed on the microring detector, and the second optical-to-electrical conversion structure is disposed on each of the two microring resonant cavities. A second optical-to-electrical conversion structure on a $1^{st}$ microring resonant cavity generates a second photocurrent $I_{m1}$ corresponding to an optical signal transmitted in the $1^{st}$ microring resonant cavity, and a second optical-to-electrical conversion structure on a $2^{nd}$ microring resonant cavity generates a second photocurrent $I_{m2}$ corresponding to an optical signal transmitted in the $2^{nd}$ microring resonant cavity. Composition of the second optical-to-electrical conversion structure may be the same as or different from composition of the first optical-to-electrical conversion structure. This is not limited in this embodiment of this application. Because detecting the optical power value of the target optical signal in each microring resonant cavity can only be applied to detecting whether the resonant wavelength of each microring resonant cavity is aligned with the wavelength of the target optical signal, a current generated by the second optical-to-electrical conversion structure can be reduced. For example, the second optical-to-electrical conversion structure may be disposed only at some positions of the microring resonant cavity, or a size of the second optical-to-electrical conversion structure is reduced, to obtain a small second photocurrent.

Optionally, the second optical-to-electrical conversion structure may be disposed on some of the N microring resonant cavities, to check wavelengths of some of the microring resonant cavities.

The photodetector provided in this embodiment of this application may have one or more of the foregoing feature 1 to feature 4, so that the photodetector provided in this embodiment of this application has high extinction ratio and a small loss.

Refer to FIG. 9. A simulation result is obtained through simulation based on coupling between one microring resonant cavity and the microring detector as an example, to describe an effect of the photodetector provided in this embodiment of this application. FIG. 9 is a diagram of relative optical power in a waveguide through port (through port), the 1st microring resonant cavity, and the microring detector. A horizontal coordinate is a wavelength offset relative to the wavelength of the target optical signal, that is, a magnitude of frequency detuning, and is in a unit of gigahertz (gigahertz, GHz). A vertical coordinate is the relative optical power, and is in a unit of decibel (decibel, dB). It can be learned from FIG. 9 that when a wavelength gradually approaches a center wavelength (a horizontal coordinate is 0), optical power is gradually captured by the microring detector and the 1st microring resonant cavity. Therefore, a curve of the through port starts to concave, and the optical power (in-ring light strength) in the microring detector and the 1st microring resonant cavity gradually increases. When the wavelength continues to approach the center wavelength, the optical power of the through port continues to decrease, and the optical power in the 1st microring resonant cavity waveguide starts to be captured by the microring detector. When the wavelength is near the center wavelength, almost all of the optical power is concentrated in the microring detector.

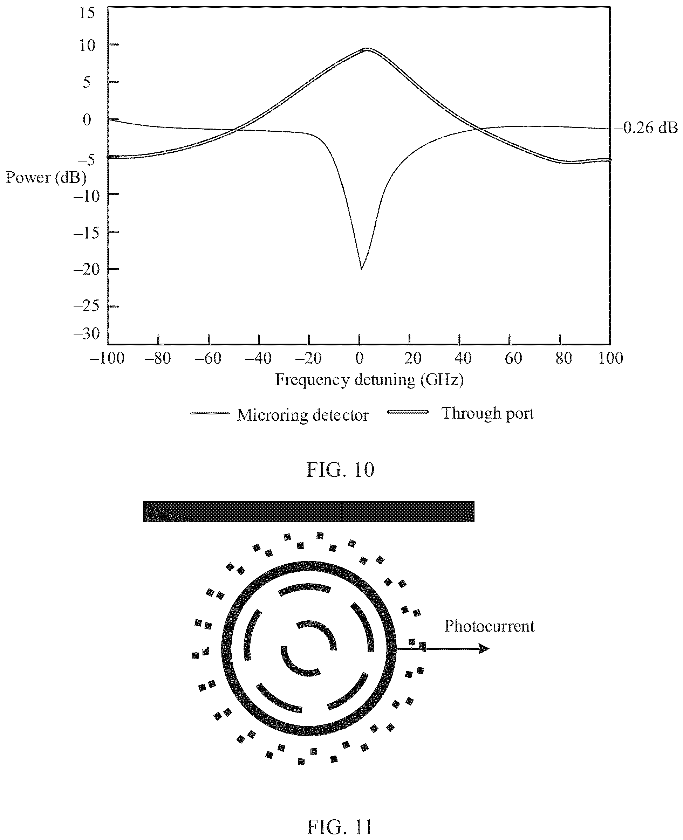

FIG. 10 is another diagram of relative optical power. The diagram shows a simulation result obtained through simulation on a single microring detector shown in FIG. 11. The single microring detector includes only one microring structure of the microring detector, and does not include another microring resonant cavity, in other words, the microring detector is directly coupled to the waveguide and generates a photocurrent.

There are two significant differences between FIG. 10 and FIG. 9. Difference 1: A curve of in-ring optical power of the microring detector changes from a flat-top to a sharp-top, and the optical power changes more significantly with the wavelength in the microring detector. Therefore, for a single microring detector, more accurate wavelength alignment is required. This is not conducive to actual application of a microring detector structure. Difference 2: The power of the through port at 100 GHz decreases from -0.1 dB to -0.26 dB. This is equivalent to a case in which the single microring detector still absorbs energy of an optical signal other than a corresponding operating wavelength. This is not conducive to integration of a plurality of channels, and causes crosstalk between different channels.

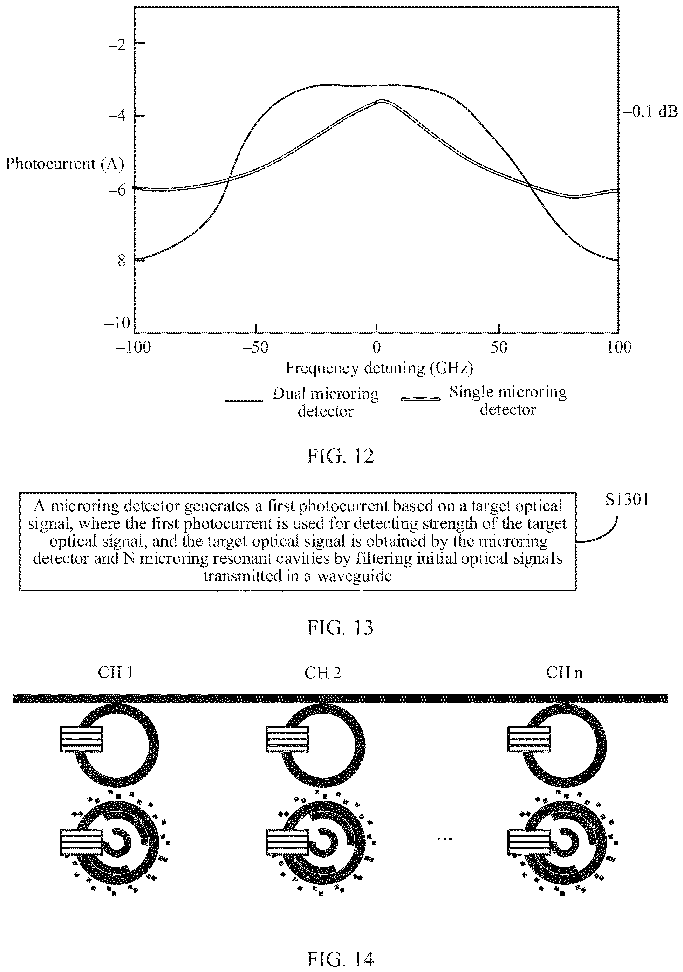

FIG. 12 is a diagram of a photocurrent response comparison result between two structures. It can be learned from FIG. 12 that, to achieve a same optical bandwidth (-20 GHz to 20 GHz), a current response of a single microring detector changes more significantly with a wavelength, a peak current is lower, and a current roll-off is slower outside a center wavelength. A current response of a dual microring detector (where a microring resonant cavity is coupled to the microring detector) is stable with a wavelength change, a peak current is higher, and a current roll-off outside is faster outside the center wavelength. It can be learned from comparison that, photodetectors of a plurality of microring structures can better implement a flat-top curve, and reduce absorption of energy of another optical signal, so that extinction ratio of optical detection is higher, and difficulty of detecting the strength of the target optical signal is lower.

In conclusion, the photodetector provided in this embodiment of this application is coupled based on one or more microring resonant cavities and the microring detector, and can have wavelength selectivity with higher extinction ratio.

For example, the microring detector not only has a filtering function, but also has a detection function. That is, a function of a conventional PD is integrated into a microring, so that a quantity of devices of the photodetector can be reduced. Because the microring detector is integrated within the channel and coupled to the microring resonant cavity, to implement optical signal transmission, the photodetector provided in this embodiment of this application can further reduce an insertion loss caused in a process in which the optical signal is transmitted from the microring resonant cavity to a connected PD, and reduce an overall loss of the photodetector. Each device of the photodetector satisfies one or more of the feature 1 to the feature 4, so that a flat-top response can be successfully implemented, and a required bandwidth and a high extinction ratio can be achieved.

In addition, because the photodetector provided in this embodiment of this application has a characteristic of high extinction ratio, each channel does not respond to an optical signal transmitted in an adjacent channel, to reduce crosstalk between different channels, and support integration of a plurality of channels. In summary, photodetectors can be integrated with ultra-high wavelength density, and still ensure high extinction ratio of adjacent channels, with a minimum additional insertion loss.

Correspondingly, an embodiment of this application further provides an optical detection method. The method can be applied to the photodetector shown in FIG. 3. For a schematic flowchart of the method, refer to FIG. 13. The method includes but is not limited to S1301.

S1301. A microring detector generates a first photocurrent based on a target optical signal, where the first photocurrent is used for detecting strength of the target optical signal, and the target optical signal is obtained by the microring detector and N microring resonant cavities by filtering initial optical signals transmitted in a waveguide.

For a method performed by each structure in S1301, refer to the foregoing descriptions of functions of each structure of the photodetector. Details are not described herein again.

In addition, an embodiment of this application further provides an optical receiving system. The optical receiving system includes an optical detection array. The optical detection array includes a waveguide and at least one photodetector. The at least one photodetector is separately coupled to the waveguide. Each of the at least one photodetector is the photodetector having one or more features described above. The waveguide is configured to receive initial optical signals transmitted by an optical transmitter. Each of the at least one photodetector is configured to generate a first photocurrent. The first photocurrent is used for detecting strength of an optical signal of a corresponding wavelength in the initial optical signals. A wavelength of an optical signal detected by each photodetector is different.

For example, for a structure of the optical detection array, refer to FIG. 14. The optical detection array is an array of cascaded photodetectors. Each channel is aligned with a different wavelength, and WDM channel information of different wavelengths is separately detected. For example, a channel (channel, CH) 1, a channel 2, to a channel n correspond to n target signals of different wavelengths.

The waveguide transmits WDM signals of a plurality of wavelengths. When a specific wavelength passes through a corresponding photodetector, for example, when an optical signal of a wavelength 1 passes through the CH 1, the optical signal is obtained by a 1st microring resonant cavity in the channel 1, enters the channel 1, and finally is absorbed by a microring detector in the channel 1. A first photocurrent (photocurrent, Iph) is generated based on absorbed optical power.

In a possible implementation, the optical receiving system further includes a receiver array and a receiver circuit (receiver circuit). The receiver array includes at least one transimpedance amplifier and at least one operational amplifier. A quantity of the at least one transimpedance amplifier, a quantity of the at least one operational amplifier, and a quantity of the at least one photodetector are the same. One transimpedance amplifier is connected to one operational amplifier, one transimpedance amplifier is connected to one photodetector, and the at least one operational amplifier is connected to the receiver circuit. The transimpedance amplifier is configured to convert the first photocurrent into a first photovoltage. The operational amplifier is configured to amplify the first photovoltage to obtain an amplified photovoltage, and send the amplified photovoltage to the receiver circuit. The receiver circuit is configured to receive the amplified photovoltage.

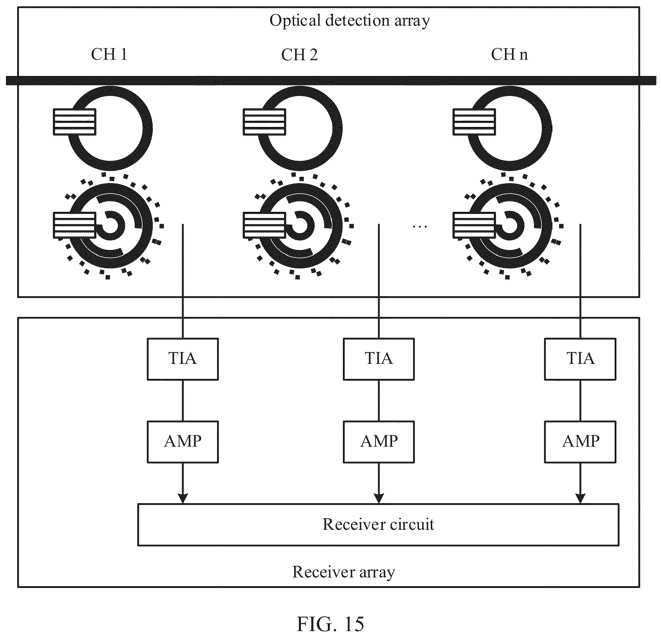

For example, for a complete structure of the optical receiving system, refer to FIG. 15. A microring detector in each photodetector may be connected to one transimpedance amplifier (transimpedance amplifier, TIA), and the transimpedance amplifier may be connected to an operational amplifier (amplifier, AMP). Because a rate of a signal received by each microring detector is low (which is generally 8G bits per second (bps) to 56 Gbps), a first photocurrent generated based on an optical signal with a low rate is also small. Therefore, after the first photocurrent is converted by the transimpedance amplifier into the first photovoltage and amplified by the operational amplifier, an optical signal transmitted through an optical fiber may be restored, and may directly enter a receiver circuit and a signal processing unit and a register that are connected to the receiver circuit, without a serializer/deserializer (serializer/deserializer, SerDes) to convert the rate of the optical signal, so that a delay can be reduced, and costs can be reduced.

In conclusion, the WDM optical receiver array based on the microring detector may be a dense wavelength division multiplexing (dense wavelength division multiplexing, DWDM) optical receiver array, and may implement single-fiber high-capacity communication by integrating a plurality of wavelength channels.

An embodiment of this application further provides a chip. The photodetector provided in this embodiment of this application is deployed on the chip. One photodetector may be integrated into a chip, or may be integrated into a module on the chip. The chip may be integrated with a main chip. The main chip may be, for example, a central processing unit (central processing unit, CPU), a GPU, a neural network processing unit (neural network processing unit, NPU), and a deep learning processor (deep learning processing unit, DPU). The chip may be integrated with the main chip on an interposer (interposer), and provides an OIO interconnection pathway for the main chip.

In addition, the receiver array may alternatively be integrated into an independent chip. Alternatively, the receiver array may alternatively be integrated with a transmitter array on one chip.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk), or the like.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application shall fall within the protection scope of this application.

**Claims**

1. A photodetector, wherein the photodetector is coupled to a waveguide, the photodetector comprises a microring detector and N microring resonant cavities that are successively arranged, wherein N is an integer greater than or equal to 1, a $1^{st}$ microring resonant cavity in the N microring resonant cavities is coupled to the waveguide and a coupling coefficient is a first coupling coefficient, the microring detector is coupled to an $N^{th}$ microring resonant cavity in the N microring resonant cavities and a coupling coefficient is a second coupling coefficient, and the first coupling coefficient is greater than or equal to the second coupling coefficient; and
the microring detector is configured to generate a first photocurrent based on a target optical signal, wherein the first photocurrent is used for detecting strength of the target optical signal, and the target optical signal is obtained by the microring detector and the N microring resonant cavities by filtering initial optical signals transmitted in the waveguide.

2. The photodetector according to claim 1, wherein N is an integer greater than or equal to 2, two adjacent microring resonant cavities in the N microring resonant cavities are coupled, a coupling coefficient between every two adjacent microring resonant cavities in the N microring resonant cavities is a third coupling coefficient, the first coupling coefficient is greater than or equal to the third coupling coefficient, and the second coupling coefficient is less than or equal to the third coupling coefficient.

3. The photodetector according to claim 2, wherein N is an integer greater than 2, a third coupling coefficient between an intermediate resonant cavity and a previous microring resonant cavity is greater than or equal to a third coupling coefficient between the intermediate resonant cavity and a next microring resonant cavity, and the intermediate resonant cavity is a microring resonant cavity other than the $1^{st}$ microring resonant cavity and the $N^{th}$ microring resonant cavity in the N microring resonant cavities.

4. The photodetector according to any one of claims 1 to 3, wherein the microring detector and the N microring resonant cavities have different radiuses.

5. The photodetector according to any one of claims 1 to 4, wherein a loss coefficient of the microring detector is greater than a loss coefficient of each of the N microring resonant cavities.

6. The photodetector according to any one of claims 1 to 5, wherein a first optical-to-electrical conversion structure is disposed on the microring detector; and
the first optical-to-electrical conversion structure is configured to generate the first photocurrent based on the target optical signal.

7. The photodetector according to any one of claims 1 to 6, wherein a first tuner is disposed on the microring detector; and
the first tuner is configured to adjust a first resonant wavelength of the microring detector to a wavelength of the target optical signal, wherein the first resonant wavelength is a center wavelength in a wavelength range of the target optical signal.

8. The photodetector according to any one of claims 1 to 7, wherein a second optical-to-electrical conversion structure is disposed on each of the N microring resonant cavities; and
the second optical-to-electrical conversion structure is configured to generate a second photocurrent, wherein the second photocurrent is used for detecting the strength of the target optical signal.

9. The photodetector according to any one of claims 1 to 8, wherein a second tuner is disposed on each of the N microring resonant cavities; and
the second tuner is configured to adjust a second resonant wavelength of each microring resonant cavity to the wavelength of the target optical signal, wherein the second resonant wavelength is a center wavelength in a wavelength range of an optical signal transmitted in each microring resonant cavity.

10. An optical receiving system, wherein the optical receiving system comprises an optical detection array, the optical detection array comprises a waveguide and at least one photodetector, the at least one photodetector is separately coupled to the waveguide, and each of the at least one photodetector is the photodetector according to any one of claims 1 to 9;

the waveguide is configured to receive initial optical signals transmitted by an optical transmitter; and
each of the at least one photodetector is configured to generate a first photocurrent, wherein the first photocurrent is used for detecting strength of an optical signal of a corresponding wavelength in the initial optical signals, and a wavelength of an optical signal detected by each photodetector is different.

11. The optical receiving system according to claim 10, wherein the optical receiving system further comprises a receiver array and a receiver circuit, the receiver array comprises at least one transimpedance amplifier and at least one operational amplifier, a quantity of the at least one transimpedance amplifier, a quantity of the at least one operational amplifier, and a quantity of the at least one photodetector are the same, one transimpedance amplifier is connected to one operational amplifier, one transimpedance amplifier is connected to one photodetector, and the at least one operational amplifier is connected to the receiver circuit;

the transimpedance amplifier is configured to convert the first photocurrent into a first photovoltage;
the operational amplifier is configured to amplify the first photovoltage to obtain an amplified photovoltage, and send the amplified photovoltage to the receiver circuit; and
the receiver circuit is configured to receive the amplified photovoltage.

12. An optical detection method, wherein the method is applied to a photodetector, the photodetector is coupled to a waveguide, the photodetector comprises a microring detector and N microring resonant cavities that are successively arranged, wherein N is an integer greater than or equal to 1, a $1^{st}$ microring resonant cavity in the N microring resonant cavities is coupled to the waveguide and a coupling coefficient is a first coupling coefficient, the microring detector is coupled to an $N^{th}$ microring resonant cavity in the N microring resonant cavities and a coupling coefficient is a second coupling coefficient, and the first coupling coefficient is greater than or equal to the second coupling coefficient; and the method comprises:

generating, by the microring detector, a first photocurrent based on a target optical signal, wherein the first photocurrent is used for detecting strength of the target optical signal, and the target optical signal is obtained by the microring detector and the N microring resonant cavities by filtering initial optical signals transmitted in the waveguide.

13. The method according to claim 12, wherein N is an integer greater than or equal to 2, two adjacent microring resonant cavities in the N microring resonant cavities are coupled, a coupling coefficient between every two adjacent microring resonant cavities in the N microring resonant cavities is a third coupling coefficient, the first coupling coefficient is greater than or equal to the third coupling coefficient, and the second coupling coefficient is less than or equal to the third coupling coefficient.

14. The method according to claim 12 or 13, wherein N is an integer greater than 2, a third coupling coefficient between an intermediate resonant cavity and a previous microring resonant cavity is greater than or equal to a third coupling coefficient between the intermediate resonant cavity and a next microring resonant cavity, and the intermediate resonant cavity is a microring resonant cavity other than the $1^{st}$ microring resonant cavity and the $N^{th}$ microring resonant cavity in the N microring resonant cavities.

15. The method according to any one of claims 12 to 14, wherein the microring detector and the N microring resonant cavities have different radiuses.

16. The method according to any one of claims 12 to 15, wherein a loss coefficient of the microring detector is greater than a loss coefficient of each of the N microring resonant cavities.

17. The method according to any one of claims 12 to 16, wherein a first optical-to-electrical conversion structure is disposed on the microring detector; and generating, by the microring detector, the first photocurrent based on the target optical signal comprises: generating, by the first optical-to-electrical conversion structure, the first photocurrent based on the target optical signal.

18. The method according to any one of claims 12 to 17, wherein a first tuner is disposed on the microring detector; and before generating, by the microring detector, the first photocurrent based on the target optical signal, the method further comprises:

adjusting, by the first tuner, a first resonant wavelength of the microring detector to a wavelength of the target optical signal; and filtering, by the microring detector, the initial optical signals based on the first resonant wavelength, to obtain the target optical signal, wherein the first resonant wavelength is a center wavelength in a wavelength range of the target optical signal.

19. The method according to any one of claims 12 to 18, wherein a second optical-to-electrical conversion structure is disposed on each of the N microring resonant cavities; and the method further comprises: generating, by the second optical-to-electrical conversion structure, at least one second photocurrent, wherein the second photocurrent is used for detecting the strength of the target optical signal.

20. The method according to any one of claims 12 to 19, wherein a second tuner is disposed on each of the N microring resonant cavities; and before generating, by the microring detector, the first photocurrent based on the target optical signal, the method further comprises:

adjusting, by the second tuner, a second resonant wavelength of the microring resonant cavity to the wavelength of the target optical signal; and filtering, by the microring resonant cavity, the initial optical signals based on the second resonant wavelength, to obtain the target optical signal, wherein the second resonant wavelength is the center wavelength in the wavelength range of the target optical signal.

21. A chip, wherein the photodetector according to any one of claims 1 to 9 is deployed on the chip.

FIG. 1

FIG. 2

FIG. 3

FIG. 4

FIG. 5

FIG. 6

Second
photocurrent

Second
photocurrent

First
photocurrent

FIG. 7

FIG. 8

Frequency detuning (GHz)

- - - 1st microring resonant cavity
——— Microring detector
═══ Through port

FIG. 9

FIG. 10

FIG. 11

FIG. 12

A microring detector generates a first photocurrent based on a target optical signal, where the first photocurrent is used for detecting strength of the target optical signal, and the target optical signal is obtained by the microring detector and N microring resonant cavities by filtering initial optical signals transmitted in a waveguide

S1301

FIG. 13

FIG. 14

FIG. 15

## INTERNATIONAL SEARCH REPORT

| International application No. |
|---|
| **PCT/CN2024/074759** |

**A. CLASSIFICATION OF SUBJECT MATTER**

G02B6/293(2006.01)i; H04J14/02(2006.01)i; H01L31/108(2006.01)i

According to International Patent Classification (IPC) or to both national classification and IPC

**B. FIELDS SEARCHED**

Minimum documentation searched (classification system followed by classification symbols)

IPC:G02B6,H04J14,H01L31

Documentation searched other than minimum documentation to the extent that such documents are included in the fields searched

Electronic data base consulted during the international search (name of data base and, where practicable, search terms used)

CNTXT: ENTXTC; ENTXT; VEN: 微环, 谐振, 耦合系数, 耦合效率, 递减, 降低, 光电探测, 滤波, 带宽, 平顶, 平坦, micro ring, resonator, coupling coefficient, coupling efficiency, decrease, reduce, PD, filter, bandwidth, flat

**C. DOCUMENTS CONSIDERED TO BE RELEVANT**

| Category* | Citation of document, with indication, where appropriate, of the relevant passages | Relevant to claim No. |
|---|---|---|
| Y | US 2017219776 A1 (TIMURDOGAN ERMAN et al.) 03 August 2017 (2017-08-03) description, paragraphs 0032-0076, and figures 1-6 | 1-21 |
| Y | WO 2020073250 A1 (HUAWEI TECHNOLOGIES CO., LTD.) 16 April 2020 (2020-04-16) description, pages 6-8, and figures 3-5 | 1-21 |
| Y | US 2015380900 A1 (HEWLETT-PACKARD DEVELOPMENT COMPANY, L.P.) 31 December 2015 (2015-12-31) description, paragraphs 0035-0039, and figures 1-2 | 4, 15 |
| Y | US 2014110572 A1 (THE HONG KONG UNIVERSITY OF SCIENCE AND TECHNOLOGY) 24 April 2014 (2014-04-24) description, paragraphs 0046-0064, and figure 1 | 8-9, 19-20 |
| A | CN 113783653 A (XI'AN INSTITUTE OF OPTICS AND PRECISION MECHANICS, CHINESE ACADEMY OF SCIENCES) 10 December 2021 (2021-12-10) entire document | 1-21 |
| A | US 2021013356 A1 (HEWLETT PACKARD ENTERPRISE DEVELOPMENT L.P.) 14 January 2021 (2021-01-14) entire document | 1-21 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2024** | **14 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074759** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105814483 A (TELEFONAKTIEBOLAGET LM ERICSSON (PUBL)) 27 July 2016 (2016-07-27)<br>     entire document | 1-21 |

**INTERNATIONAL SEARCH REPORT**
**Information on patent family members**

International application No.

**PCT/CN2024/074759**

| Patent document cited in search report | | | Publication date (day/month/year) | Patent family member(s) | | | Publication date (day/month/year) |
|---|---|---|---|---|---|---|---|
| US | 2017219776 | A1 | 03 August 2017 | US | 9939586 | B2 | 10 April 2018 |
| | | | | WO | 2017184226 | A1 | 26 October 2017 |
| WO | 2020073250 | A1 | 16 April 2020 | CN | 111727395 | A | 29 September 2020 |
| | | | | CN | 111727395 | B | 07 September 2021 |
| US | 2015380900 | A1 | 31 December 2015 | WO | 2014142832 | A1 | 18 September 2014 |
| | | | | WO | 2014142832 | A8 | 15 October 2015 |
| | | | | US | 10027089 | B2 | 17 July 2018 |
| | | | | EP | 2972531 | A1 | 20 January 2016 |
| | | | | EP | 2972531 | A4 | 07 December 2016 |
| | | | | KR | 20150128718 | A | 18 November 2015 |
| | | | | CN | 105190385 | A | 23 December 2015 |
| US | 2014110572 | A1 | 24 April 2014 | US | 9134169 | B2 | 15 September 2015 |
| CN | 113783653 | A | 10 December 2021 | CN | 113783653 | B | 08 July 2022 |
| US | 2021013356 | A1 | 14 January 2021 | US | 11056603 | B2 | 06 July 2021 |
| CN | 105814483 | A | 27 July 2016 | WO | 2015087261 | A1 | 18 June 2015 |
| | | | | EP | 3080662 | A1 | 19 October 2016 |
| | | | | EP | 3080662 | B1 | 16 August 2017 |
| | | | | US | 2015168803 | A1 | 18 June 2015 |
| | | | | US | 9261754 | B2 | 16 February 2016 |
| | | | | US | 2015168803 | A1 | 08 June 2015 |
| | | | | CN | 105814483 | B | 06 August 2019 |
| | | | | IN | 201637021641 | A | 26 August 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311107881